# EUROPEAN PATENT APPLICATION

(11) **EP 2 808 208 A1**
(43) Date of publication of application: **03.12.2014**
(21) Application number: 13305724.0
(22) Date of filing: 31.05.2013
(51) Int. Cl.: B60S 1/48, B60S 1/38

(54) **Longitudinal substrate and wiper for motor vehicle**

(71) Applicant: Valeo Systèmes d'Essuyage, 78321 Le Mesnil Saint Denis (FR)
(72) Inventor: Schaeuble, Michael, 71665 VAIHINGEN/ENZ (DE); Grasso, Giuseppe, 63340 Le Breuil sur Couze (FR)
(74) Representative: Callu Danseux, Violaine

(57) **Abstract**

The invention relates to a longitudinal substrate for wiper for motor vehicle, comprising:
- a longitudinal guide (2; 25) to receive a spline (3) of said wiper, and
- wiping blade fixation means to maintain the wiping blade (5) of said wiper,

characterized in that the longitudinal substrate comprises at least one holder (18; 23; 24; 29) configured to maintain at least one heating element (15) of the wiper.

It also relates to a wiper comprising such a longitudinal substrate.

## Description

The present invention relates to a wiper for motor vehicle. The invention also relates to a longitudinal substrate for said wiper.

Some wipers for motor vehicle, known as "flexible blade" or "flat blade", comprise a central member comprising a longitudinal substrate made of a semi-rigid material, a metal rod accommodated in a longitudinal cavity of the substrate, a wiping blade and an accessory.

This metallic rod or "spline" has a double function of providing, on the one hand, to the whole wiper the stiffness required for a correct mechanical behavior, as well as the distribution of pressure exerted by the driving arm on the windscreen.

The wiping blade made of elastomer is fixed to the longitudinal substrate through a claw extruded with the substrate.

The accessory is intended to improve the quality of the wiping. It is generally made of elastomer and is assembled with the longitudinal substrate through various means.

The accessory may comprise an aerodynamic deflector which uses the relative wind flowing on the vehicle to increase the force of the contact of the wiper against the window to be wiped.

In some wipers, known as "aquablade" wipers, the accessory comprises at least one fluid channel arranged laterally along the longitudinal substrate, provided with holes enabling the spraying of the washing liquid onto the windscreen. In a one-channel version, the accessory comprises only one fluid channel whereas in a bi-channel version, it includes two fluid channels arranged on each side of the longitudinal substrate.

Some wipers further comprise heating means to be heated under negative outside temperature conditions.

For example for aquablade wipers, the washing liquid contained in the fluid channel may freeze because of the absence of anti-freeze product in the liquid. The freezing of the washing liquid in the fluid channel may disable the spraying function of the wiper and increase the stiffness of the whole structure of the wiper which is particularly penalizing within the scope of the "flexible blade" technology.

A known solution is to heat wipers by mean of heating foils glued onto the spline. However, the contact between the spline and the foil can be defective because of bad bonding or unstuck after ageing.

Moreover, usually the power supply is insured by lead frames in contact with the foil and sealed by potting material. Therefore, the process for gluing the foils onto the spline has to be very accurate and a tight control has to be exercised over to avoid any failures.

Thus, one aim of the invention is to provide a wiper for motor vehicle of the flexible blade type which would make it possible to remedy the above-mentioned drawbacks.

This object is achieved by a longitudinal substrate for wiper for motor vehicle, comprising:
- a longitudinal guide to receive a spline of said wiper, and
- wiping blade fixation means to maintain the wiping blade of said wiper,
**characterized in that** the longitudinal substrate comprises at least one holder configured to maintain at least one heating element of the wiper.

Thus, the fixation of the heating element is easier and the manufacturing process is cheaper. No more sticking processes requiring accurate assembly are necessary.

Said at least one holder may be shaped in the substrate body of said longitudinal substrate.

Said longitudinal substrate may comprise a plurality of holders which are regularly distributed all along the longitudinal substrate. It is therefore easy to provide a longitudinal substrate at the right length simply by cutting transversally the substrate body of the longitudinal substrate.

For example, the length of said holders is longer than the length of the spaces between two successive holders. Thus, the heating element is strongly handled.

In another example, the length of said holders is shorter than the length of the spaces between two successive holders. Thus, many arrangements of the heating element are possible.

Said at least one holder is for example interposed between the spline and the accessory.

The longitudinal substrate may comprise a plurality of holders that are arranged by pair, each holder being configured to maintain a heating element, each holder of a pair being arranged laterally on each side of a symmetrical longitudinal plane of said longitudinal substrate.

Said at least one holder may be configured to put said heating element in contact with the spline. The advantage is to provide a good heat transfer because of the metallic nature of the spline. Moreover, the heat is thus spread all along the wiper. This embodiment takes the benefit of the only metallic part of the wiper which is the spline.

Said at least one holder may extend longitudinally.

Said at least one holder may be configured to hold the heating element in a removable way. For example, said at least one holder comprises an eyelet or deformable means such as a clip. Said clip may be a lip.

In one embodiment, said longitudinal guide comprises a base part and a cover part, holders being arranged in the cover part, and the cover part comprises a plurality of transversal slots that extend transversally in the longitudinal substrate between two successive holders. Those transversal slots provide flexibility of the wiper enabling, in particular, to fit closely the shape of the windscreen.

For example, said transversal slots extend up to half cross-section of the longitudinal guide.

In another embodiment, said at least one holder is arranged on at least one longitudinal edge of an opening of the longitudinal guide.

The invention has also for object a wiper for motor vehicle **characterized in that** it comprises a longitudinal substrate such as previously described, a spline received in a longitudinal guide of said longitudinal substrate, a wiping blade fixed to said longitudinal substrate and a heating element fixed to said longitudinal substrate.

The heating element is for example a heating wire. In an embodiment, the heating wire makes at least one loop running all along the longitudinal substrate.

Said wiper comprises an accessory that may comprise, in the "aquablade" version, at least one fluid channel arranged along the longitudinal substrate, provided with holes enabling the spraying of the washing liquid. Thus, the washing liquid flowing through the fluid channel which might be frozen under negative outside temperature conditions can therefore be heated by the heating element. It is thus possible to restore or maintain the spraying function and the flexibility of the wiper that could have been restrained by the frozen liquid.

Other objects, features and advantages of the invention will become apparent from the following description of a non-limited example and enclosed drawings. For a better understanding of the invention with regard to the embodiments thereof, reference is made to the accompanying drawings, in which like numerals designate corresponding elements or sections throughout, and in which:
- Figure 1 is a partial perspective view of some elements of a wiper for motor vehicle according to a first embodiment for an aquablade version,
- Figure 2 shows a perspective view of some elements of the wiper of figure 1,
- Figure 3 shows a perspective view of the elements of the wiper of figure 2, in a disassembled state,
- Figure 4 shows a cross-section of the wiper of figure 1,
- Figure 5 shows a cross-section of the longitudinal substrate of figure 1, with heating elements,
- Figure 6 shows a lateral view of the longitudinal substrate together with the wiping blade and the spline, said spline exceeding the longitudinal guide of the longitudinal substrate,
- Figure 7 shows a perspective view of the longitudinal substrate including the wiping blade and the spline,
- Figure 8 shows a top view of the wiper elements of figure 7,
- Figure 9 shows a cross-section of the wiper of figure 1, cut through a slot,
- Figure 10 shows an enlarged view of the electrical connector of figure 2,
- Figure 11a shows another example of the arrangement of the heating element on the longitudinal substrate,
- Figure 11b shows an enlarged top view of the back end of the wiper of figure 11a,
- Figure 11c shows an enlarged view of the front end of the wiper of figure 11a,
- Figure 11d shows an enlarged view of the connector area of the wiper of figure 11a, with the longitudinal substrate represented by transparency,
- Figure 12a shows a third example of the arrangement of the heating element on the longitudinal substrate,
- Figure 12b shows an enlarged top view of the back end of the wiper of figure 12a,
- Figure 12c shows an enlarged view of the connector area of the wiper of figure 12a,
- Figure 13a shows a fourth example of the arrangement of the heating element on the longitudinal substrate,
- Figure 13b shows an enlarged top view of the back end of the wiper of figure 13a,
- Figure 13c shows an enlarged view of the front end of the wiper of figure 13a,
- Figure 13d shows an enlarged view of the connector area of the wiper of figure 13a,
- Figure 14 shows a cross-section of a second embodiment of a longitudinal substrate with heating wires,
- Figure 15 shows a cross-section of a third embodiment of a longitudinal substrate with heating wires,
- Figure 16 shows a fourth embodiment of a wiper for a one-channel version,
- Figure 17 shows a cross-section of a fifth embodiment of a longitudinal substrate with heating wires,
- Figure 18 shows a cross-section of a sixth embodiment of a longitudinal substrate with heating wires, and
- Figure 19 shows a cross-section of a seventh embodiment of a longitudinal substrate with heating wires.

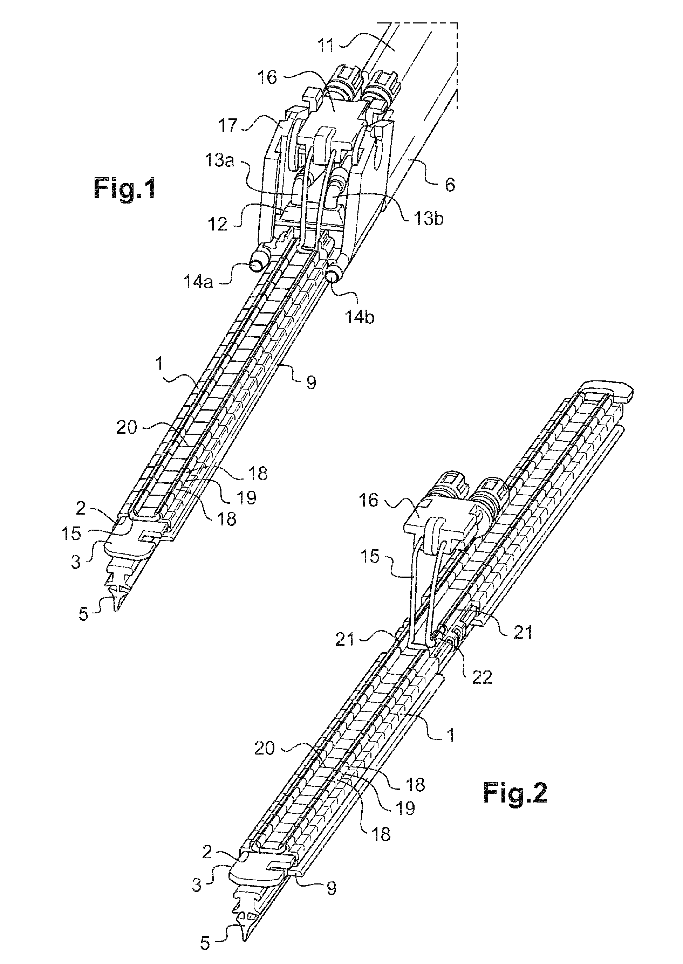

Figures 1 to 19 show some elements of a wiper for motor vehicle, known as "flexible blade" or "flat blade".

The wiper includes a longitudinal substrate 1 made of a semi-rigid material, such as an extruded plastic material.

Such a substrate 1 includes a longitudinal guide 2 intended to receive a metallic stiffening rod 3 or "spline" which extends substantially on the whole length of the wiper. The spline 3 has a double function of providing, on the one hand, to the whole wiper the stiffness required for a correct mechanical behavior, as well as the distribution of pressure exerted by the driving arm on the windscreen.

The substrate 1 also includes wiping blade fixation means, to maintain the wiping blade 5 of the wiper. The wiping blade fixation means comprises for example longitudinal claws 4, for example extruded with the body substrate, wherein a wiping blade 5 made of elastomer is introduced.

The wiper further comprises an accessory 6, for example made of elastomer, and obtained for example by extrusion independently of the substrate 1. The accessory 6 is assembled and fixed on the longitudinal substrate 1. The accessory 6 is intended to improve the quality of the wiping.

In one embodiment, the accessory 6 may comprise an aerodynamic deflector 11 intended to improve the contact of the wiping blade 5 against the window of the vehicle.

The accessory 6 is generally composed of one or two materials. For example, it comprises a first and a second co-extruded elastomers 6a, 6b. The second material 6b is shaped with tongs to maintain longitudinally lateral wings 9 of the longitudinal substrate 1. Said second material 6b is less hard than the first material 6a in order to clip the longitudinal substrate 1 through the tongs.

It should be noted that the accessory 6 may also be assembled with the longitudinal substrate 1 through other various means.

The accessory 6 of some wipers, known as « aquablade», such as represented on figures 1 to 19, further comprises at least one fluid channel 7a, 7b arranged along the longitudinal substrate 1. This fluid channel 7a, 7b is perforated with holes 8 so as to enable a spraying of the washing liquid onto the windscreen.

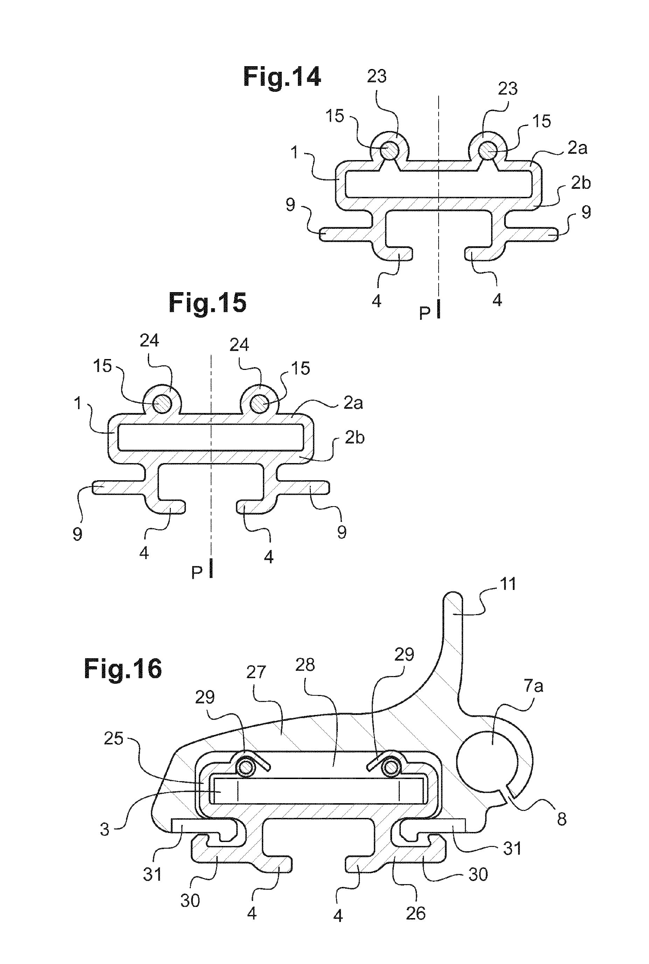

Figures 1 to 10 illustrate bi-channel versions wherein the accessory 6 includes two fluid channels 7a, 7b arranged on each side of the longitudinal substrate 1. In a one-channel version, the accessory 27 comprises only one fluid channel 7a arranged laterally (figure 16).

More precisely, the wiper comprises two accessories 6 arranged on each side of a central washing liquid connector 12 (figure 1). The central washing liquid connector 12 comprises at least one washing liquid inlet 13a, 13b (two washing liquid inlets for the bi-channel version), configured to be connected to a hydraulic line (not shown) bringing the washing liquid to the wiper. In the same manner, the central washing liquid connector 12 comprises at least one washing liquid outlet 14a, 14b, configured to be connected to a respective fluid channel 7a, 7b. Said washing liquid inlet 13a, 13b and outlet 14a, 14b, form for example a 90° elbow to distribute washing liquid in each accessory fluid channel 7a, 7b arranged on each side of the wiper.

The wiper also includes at least one heating element for heating the wiper.

The heating element is for example a heating wire 15 comprising a resistive wire powered electrically.

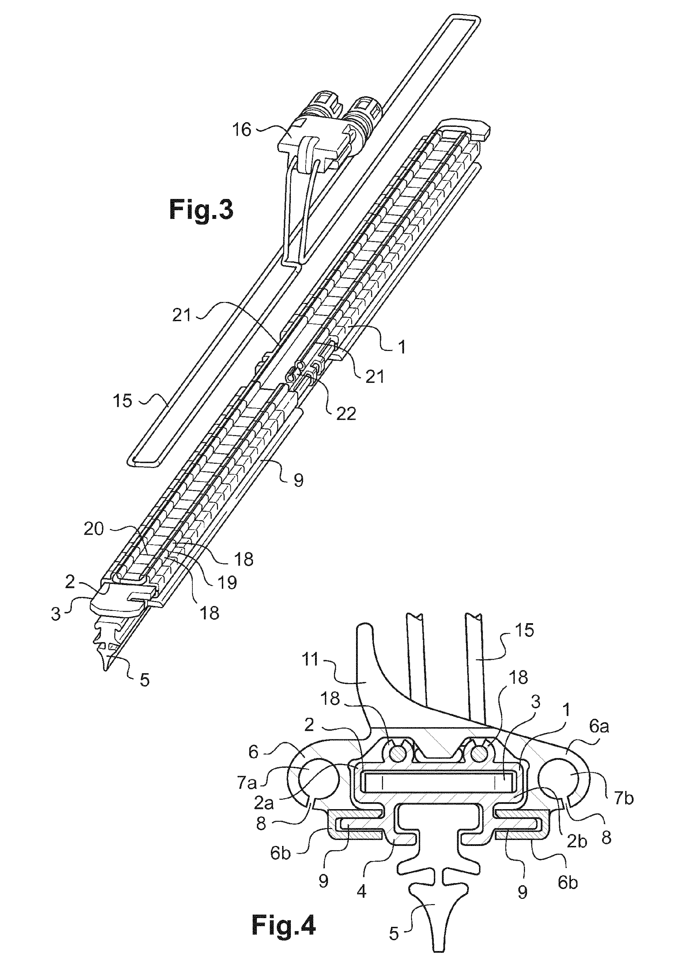

For example as shown in figure 3, the wiper comprises one heating wire 15 that makes a U-turn at each end of the wiper, making one loop running all along the longitudinal substrate 1, each end of the heating wire 15 being connected to an electrical connector 16, arranged at the middle of the wiper. Thus, in a cross-section of the wiper, two heating wires 15 can be seen, a "forth" and a "back" heating wire 15.

In the aquablade version, the heating wire 15 may be arranged near the fluid channel 7a, 7b, for heating the washing liquid flowing through the at least one fluid channel 7a, 7b. For example in the bi-channel version, each of both forth-back heating wire 15 can thus being arranged closer to a respective fluid channel 7a, 7b.

The electrical connector 16 and the central washing liquid connector 12 are arranged in a central connector 17, for example made of plastic material, wherein washing liquid outlets 14a, 14b are provided. Therefore, the washing liquid flowing through the fluid channel 7a, 7b which might be frozen under negative outside temperature conditions, can be heated by the heating wire 15. It is thus possible to restore or maintain the spraying function and the flexibility of the wiper that could have been restrained by the frozen liquid.

The longitudinal substrate 1 further comprises a plurality of holders configured to maintain said heating wire 15. Thus, the fixation of the heating wire 15 is easier. No more sticking processes requiring accurate assembly are necessary.

Said holders are shaped in the substrate body of said longitudinal substrate 1, integrated in the plastic substrate body, or in other words: holders, longitudinal guide 2 and wiping blade fixation means such as longitudinal claws 4, and accessories 6 fixation means, are formed in one piece, for example extruded with the body substrate.

In the first embodiment, holders are configured to hold the heating wire 15 in a removable way. For example, holders are deformable means, such as clips 18, each one can clip a heating wire 15 (figure 4).

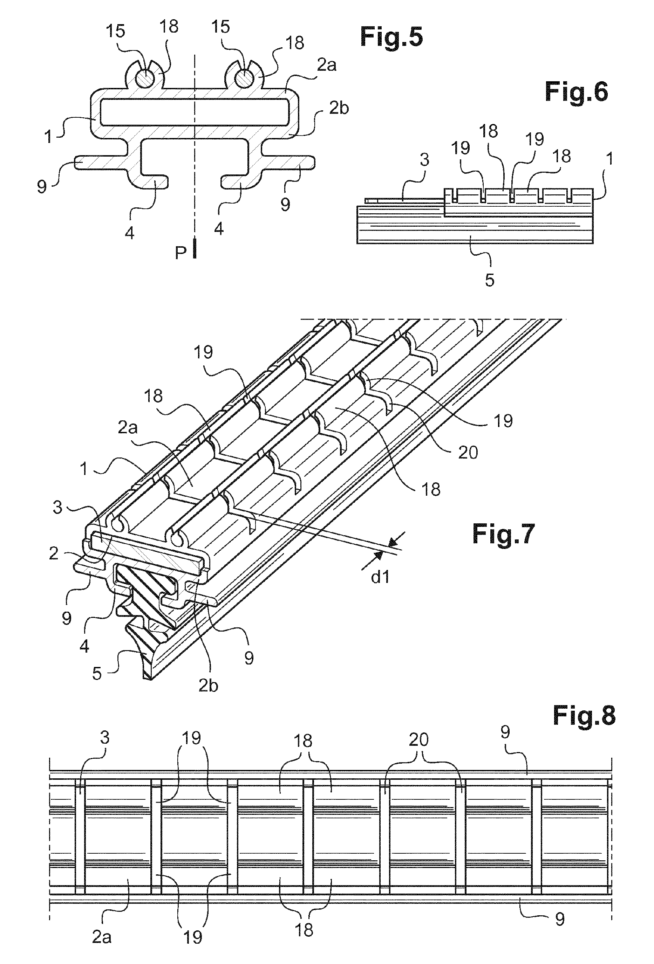

Clips 18 are arranged by pair, each clip 18 of a pair being arranged laterally on each side of a symmetrical longitudinal plane P of said longitudinal substrate 1 (Figure 5).

Clips 18 hold the heating wire 15 in a removable way, allowing removing the heating wire 15 if needed.

Clips 18 are interposed between the spline 3 and the accessory 6. For example, said clips 18 have a respective upper aperture that is oriented in front of the accessory 6 (figure 4).

Said clips 18 are regularly distributed all along the longitudinal substrate 1 and extend longitudinally. In the first embodiment shown on figures 1 to 10, the longitudinal substrate 1 comprises an alternation of spaces 19 and clips 18 (figures 6, 7 and 8). The length of said clips 18 is longer than the length d1 of the spaces 19 between two successive clips 18 (figure 7).

It is therefore easy to provide a longitudinal substrate 1 at the right length simply by cutting transversally the substrate body of the longitudinal substrate 1. Therefore, the manufacturing process is cheaper.

In the first embodiment shown in figure 4, the spline 3 is housed in the longitudinal guide 2 which is formed by a cover part 2a and a base part 2b made in one piece.

The base part 2b is continuous with the wiping blade fixations means and accessory fixations means of the longitudinal substrate 1.

Clips 18 are arranged in the cover part 2a. The cover part 2a also presents several transversal slots 20 uniformly distributed along the longitudinal substrate. In the first embodiment, each transversal slot 20 extends transversally in the longitudinal substrate 1 between two successive clips 18, joining the spaces 19 (figure 7).

The cover part 2a surrounds totally the spline 3 between two successive transversal slots 20.

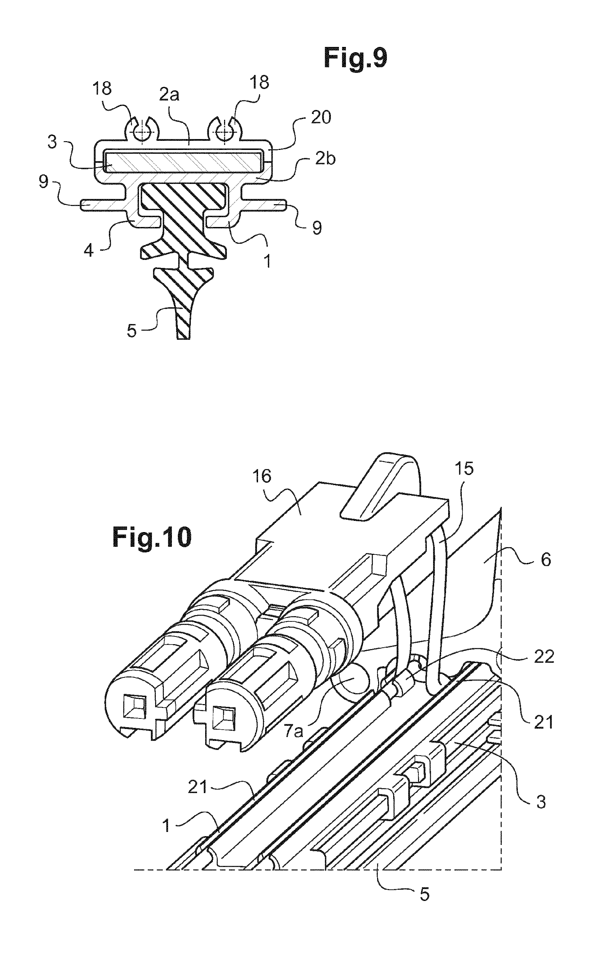

The transversal slot 20 may further extend transversally as for example, up to half cross-section of the longitudinal guide 2 (figures 7 and 9). Those transversal slots 20 allow the longitudinal flexibility of the wiper enabling, in particular, to fit closely the shape of the windscreen.

In the connector area, under the central connector 17, the longitudinal substrate 1 may comprise expanded holders 21 on both sides (figure 10).

A clearance 22 is made between two successive holders enabling the passage of both ends of the heating wire 15. The electrical connector 16 can thus be easily connected to the two ends of the heating wire 15.

Although the heating wire 15 represented on figures 1 to 10 is a single loop with a straight orientation that follows the longitudinal axis of the longitudinal guide 2, other arrangements of the heating wire 15 are possible.

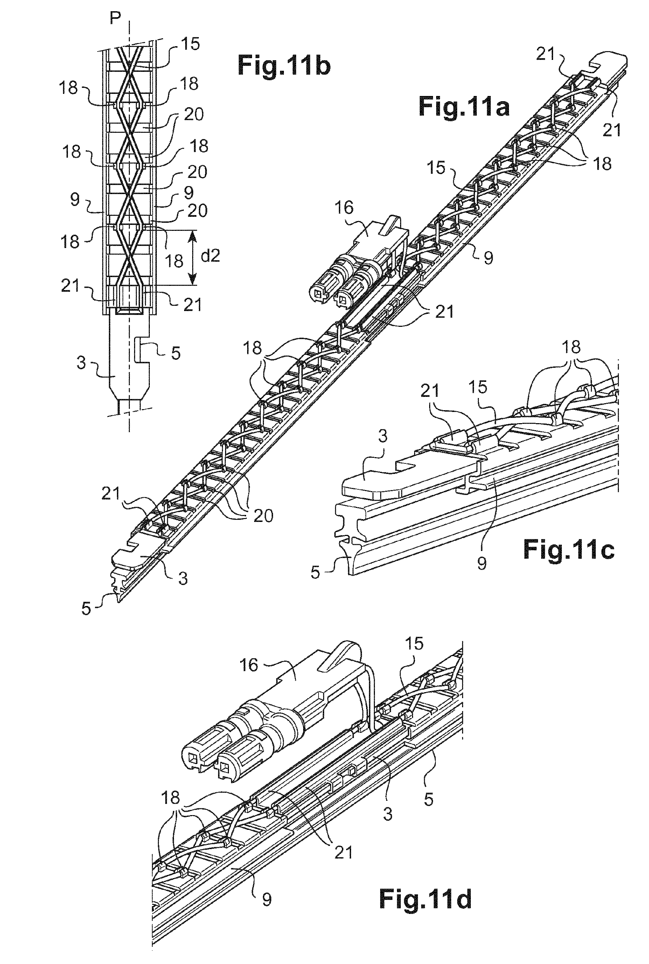

As an example, the heating wire 15 may be twisted (figures 11a, 11b, 11c and 11d).

To this end, the length of the clip 18 is shorter than the length d2 of the space between two successive clips 18. As an example for this embodiment, two transversal slots 20 are arranged between two successive clips 18 (figure 11b). Clips 18 are thus more spaced longitudinally than in the previous embodiment, allowing forth and back heating wires 15 to pass one beneath the other.

As in the connector area, the longitudinal substrate 1 may also comprise expanded holders 21 on both ends, in order to facilitate the U-turn.

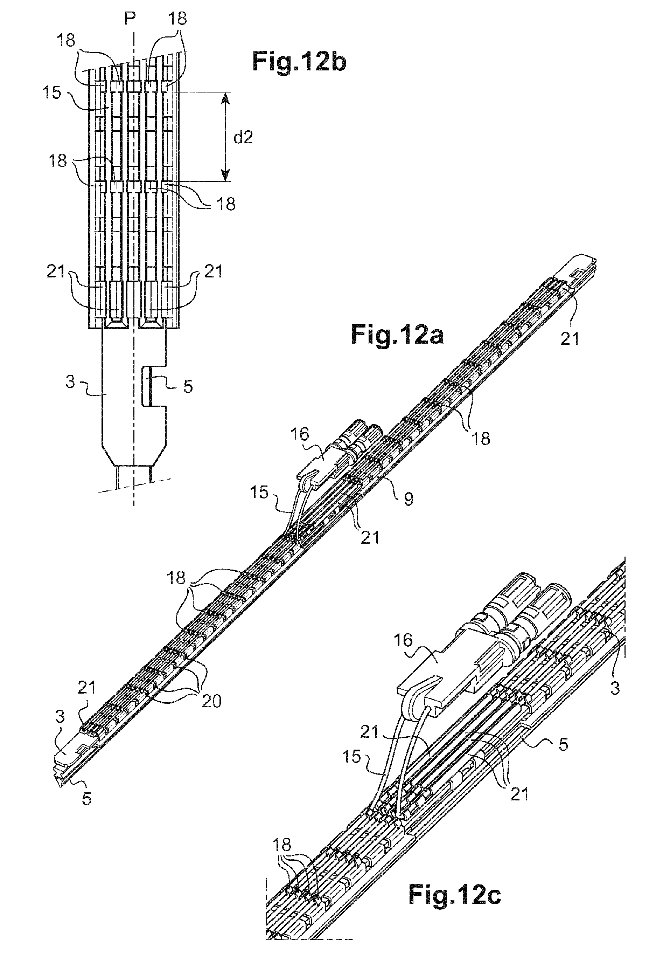

In another example, the heating wire 15 is making two side by side straight loops (figure 12a, 12b and 12c). For that, four clips 18 are arranged transversally, two clips 18 being arranged laterally on each side of the symmetrical longitudinal plane P of the longitudinal substrate 1 (Figure 12b).

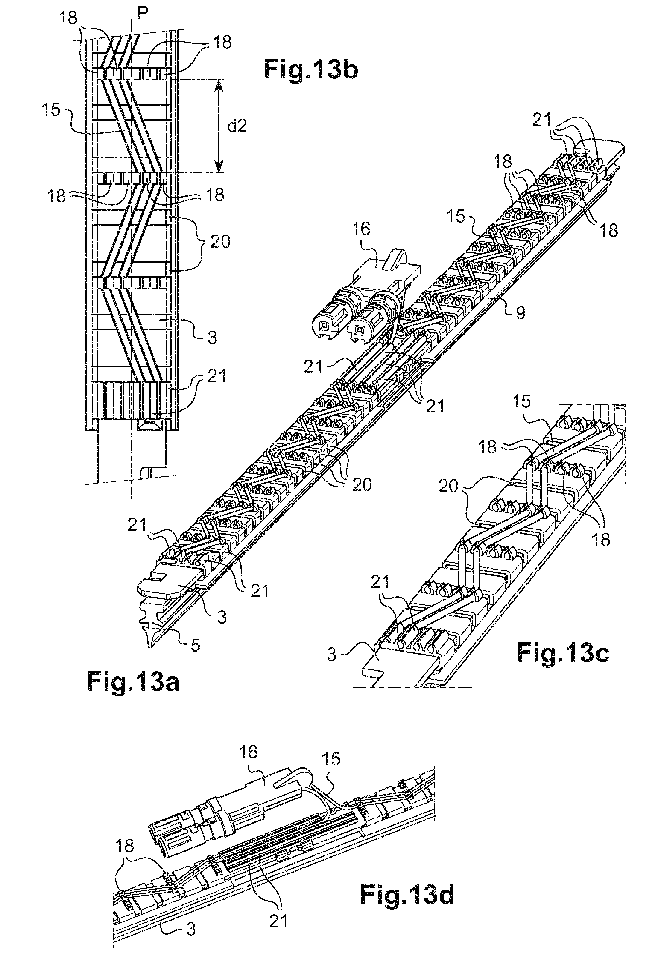

As the clips 18 are more spaced longitudinally than in the first embodiment and as they are doubled, the forth and back heating wires 15 can also zigzag, making undulations, leaving empty unused clips (figures 13a, 13b, 13c and 13d). They also can be twisted using all clips 18 (not represented).

Figure 14 shows a second embodiment wherein clips 23 have a respective downwards aperture that is oriented in front of the spline 3.

Figure 15 shows a third embodiment wherein holders comprise eyelets 24, that is to say cylindrical holders through which the heating wire 15 is slid.

Figure 16 shows a fourth embodiment of a wiper.

In this embodiment, the spline 3 is received in an open longitudinal guide 25. The cover part 25a of the open longitudinal guide 25 does not surround totally the spline 3, leaving an opening 28.

The opening 28 faces the accessory 27. Holders are arranged on at least one longitudinal edge of the opening 28 of the open longitudinal guide 25.

The accessory 27 comprises longitudinal hooks 31 that cooperate with complementary longitudinal hooks 30 to fix the longitudinal substrate 1 and the accessory 27 together.

The heating wire 15 makes a U-turn at each end of the wiper and holders are arranged by pair to maintain the forth and back heating wire 15.

Said holders comprise a plurality of lips 29, interposed between the spline 3 and the accessory 27. Each lip 29 can maintain a heating wire 15.

Such as eyelets 24, lips 29 are configured to hold the heating wire 15 in a removable way, allowing removing the heating wire 15 if needed.

Like for eyelets 24, lips 29 are regularly distributed all along the longitudinal substrate 1 and extend longitudinally.

Moreover, the lips 29 put the heating wire 15 in contact with the spline 3. The advantage is to provide a good heat transfer towards the fluid channel 7a because of the metallic nature of the spline 3. The heat thus spreads all along the wiper. This embodiment takes the benefit of the only metallic part of the wiper which is the spline 3.

Although Figure 16 illustrates a one-channel version of wiper with the accessory 27 having a single fluid channel 7a, embodiment described of the longitudinal substrate 26 may also apply for a bi-channel version or for a version wherein the accessory comprises no fluid channel.

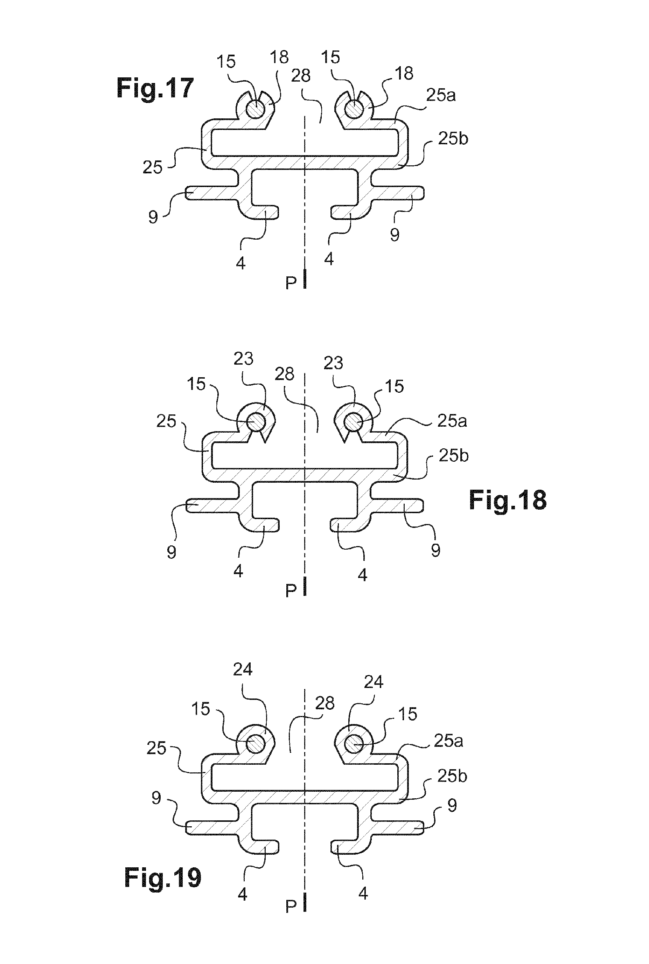

Figures 17, 18 and 19 show other embodiments of a wiper for which the spline 3 is received in an open longitudinal guide 25, the holders being arranged on at least one longitudinal edge of the opening 28 of the open longitudinal guide 25.

In the case illustrated in figure 17, the holders comprise a plurality of clips 18, interposed between the spline 3 and the accessory 27.

As in the previous embodiment represented on figure 5, the clips 18 of figure 17 are arranged by pair, each clip 18 of a pair being arranged laterally on each side of a symmetrical longitudinal plane P of the longitudinal substrate 25.

The clips 18 have a respective upper aperture that is oriented in front of the accessory 6.

Figure 18 shows another example of an open longitudinal guide 25 wherein the clips 23 have a respective downwards aperture that is oriented in front of the spline 3.

Figure 19 shows another embodiment wherein the holders of an open longitudinal guide 25 comprise eyelets 24 through which the heating wire 15 is slid.

## Claims

1. Longitudinal substrate for wiper for motor vehicle, comprising:
- a longitudinal guide (2; 25) to receive a spline (3) of said wiper, and
- wiping blade fixation means to maintain the wiping blade (5) of said wiper,
**characterized in that** the longitudinal substrate comprises at least one holder (18; 23; 24; 29) configured to maintain at least one heating element (15) of the wiper.

2. Longitudinal substrate according to claim 1, wherein said at least one holder (18; 23; 24; 29) is shaped in the substrate body of said longitudinal substrate (1; 26).

3. Longitudinal substrate according to one of the precedent claims, wherein it comprises a plurality of holders (18; 23; 24; 29) which are regularly distributed all along the longitudinal substrate (1; 26).

4. Longitudinal substrate according to claim 3, wherein the length of said holders (18; 23; 24; 29) is longer than the length (d1) of the spaces (19) between two successive holders (18; 23; 24; 29).

5. Longitudinal substrate according to claim 3, wherein the length of said holders (18) is shorter than the length (d2) of the spaces between two successive holders (18).

6. Longitudinal substrate according to one of claims 1 to 5, wherein said at least one holder (18; 23; 24; 29) is interposed between the spline (3) and the accessory (6; 27).

7. Longitudinal substrate according to one of the precedent claims, wherein it comprises a plurality of holders (18; 23; 24; 29) that are arranged by pair, each holder (18; 23; 24; 29) being configured to maintain a heating element (15), each holder of a pair being arranged laterally on each side of a symmetrical longitudinal plane (P) of said longitudinal substrate (1; 26).

8. Longitudinal substrate according to one of the precedent claims, wherein said at least one holder (23; 29) is configured to put said heating element (15) in contact with the spline (3).

9. Longitudinal substrate according to one of the precedent claims, wherein said at least one holder (18; 23; 24; 29) extends longitudinally.

10. Longitudinal substrate according to one of the precedent claims, wherein said at least one holder comprises an eyelet (24).

11. Longitudinal substrate according to one of claims 1 to 9, wherein said at least one holder comprises deformable means (18; 23; 29).

12. Longitudinal substrate according to claim 11, wherein said at least one holder comprises a clip (18; 23).

13. Longitudinal substrate according to claim 12, wherein said clip is a lip (29).

14. Longitudinal substrate according to one of claims 1 to 13, wherein said longitudinal guide (2) is formed by a base part (2b) and a cover part (2a), holders (18; 23; 24; 29) being arranged in the cover part (2a), and wherein the cover part (2a) comprises a plurality of transversal slots (20) that extend transversally in the longitudinal substrate (1; 26) between two successive holders (18; 23; 24; 29).

15. Longitudinal substrate according to claim 14, wherein said transversal slots (20) extend up to half cross-section of the longitudinal guide (2; 25).

16. Longitudinal substrate according to one of claims 1 to 13, wherein said at least one holder (29) is arranged on at least one longitudinal edge of an opening (28) of the longitudinal guide (25).

17. Wiper for motor vehicle **characterized in that** it comprises a longitudinal substrate (1; 26) according to one of claims 1 to 16, a spline (3) received in a longitudinal guide (2; 25) of said longitudinal substrate (1; 26), a wiping blade (5) fixed to said longitudinal substrate (1; 26) and a heating element (15) fixed to said longitudinal substrate (1).

18. Wiper according to claim 17, wherein the heating element is a heating wire (15).

19. Wiper according to claim 18, wherein the heating wire (15) makes at least one loop running all along the longitudinal substrate (1; 26).

20. Wiper according to one of claims 17 to 19, wherein it comprises an accessory (6; 27) comprising at least one fluid channel (7a, 7b) arranged along the longitudinal substrate (1; 26), provided with holes (8) enabling the spraying of the washing liquid.
